# EUROPÄISCHE PATENTANMELDUNG

(11) **EP 1 500 325 A2**
(43) Veröffentlichungstag der Anmeldung: **26.01.2005**
(21) Anmeldenummer: 04103323.4
(22) Anmeldetag: 13.07.2004
(51) Int. Cl.: A01F 15/14, B65B 13/18

(54) **Bindearm einer Bindevorrichtung**

(30) Priorität: 24.07.2003 DE 10333592
(71) Anmelder: DEERE & COMPANY, Moline, Illinois 61265-8098 (US)
(72) Erfinder: Uros, Raymond, 70100, Gray (FR); Simon, Jerome, 70100, Nantilly (FR); Paillet, Frederic, 70100, Gray (FR); Lucot, Alain, 70150, Marnay (FR)
(74) Vertreter: Magin, Ludwig Bernhard

(57) **Zusammenfassung**

2.1. Bei herkömmlichen Bindevorrichtungen (16) wickelt sich das freie Ende des Bindegarns (18) nach dem Abschneiden um den Bindearm (26), sobald die Spannung nach dem Schneidevorgang wegfällt.
2.2. Es wird vorgeschlagen, an den Endabschnitt des Bindearms 26 einen Führungsteil (30) anzubringen, der die unkontrollierte Bewegung des zurückschnellenden Bindegarns (18) begrenzt.
2.3. Bindearme (26) werden an Rundballenpressen (10) verwendet.

## Beschreibung

Die Erfindung betrifft einen Bindearm einer Bindevorrichtung in einer Rundballenpresse.

Die EP-A1-1 308 080 offenbart eine Rundballenpresse mit einer Bindevorrichtung, die Bindegarn von oben her durch einen Spalt in eine Presskammer gelangen lässt. Das Bindegarn wird mittels eines Bindearms zu dem Spalt geführt, sobald der Bindevorgang beginnen soll, woraufhin ein freier herabhängender Endabschnitt des Bindegarns von dem in der Presskammer sich bewegenden Rundballen mitgenommen wird. Sobald der Rundballen ausreichend mit Bindegarn umwickelt ist, wird das Bindegarn kurzzeitig festgeklemmt, damit es sich in die Oberfläche des Rundballens einzieht, und anschließend getrennt. Da das Bindegarn unmittelbar vor dem Trennen unter einer hohen Spannung steht, schnurrt es nach dem Trennen zusammen und wird nach oben geschleudert.

Das der Erfindung zugrunde liegende Problem wird darin gesehen, dass sich das freie Bindegarnende nach dem Trennvorgang aufgrund der inhärenten Elastizität um den Bindearm wickelt oder eine nach oben gebogene Form einnimmt, was schließlich dazu führt, dass das Bindegarn nicht mehr durch den Spalt reicht und der Bindevorgang nicht ausgelöst wird.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird der freie Bindegarnabschnitt jedenfalls auf einem Teil seiner Länge davon abgehalten, nach oben zu schnellen bzw. sich dauerhaft zu verformen. Dabei ist zu bedenken, dass die größte Krafteinwirkung und somit auch die größte Verformung am Austritt des bekannten Bindearms stattfindet, weil dort das Bindegarn über eine Kante nach unten gezogen wird. Zwar hängt die Länge des Führungsteils von dem Abstand zwischen dem Bindearm und dem Spalt ab; er sollte sich jedoch nur über einen Teil dieses Abstands, z. B. über ein Viertel, erstrecken, damit der Bindegarnabschnitt frei in den Spalt geringer eintreten kann und um die Bewegungsfreiheit des Bindearms nicht zu beeinträchtigen. "Aufrecht" ist nicht in einem Sinn von neunzig Grad, sondern als Ausrichtung auf den unterhalb des Bindearms liegenden Spalt zu verstehen. Selbstverständlich können auch mehrere derartige Bindearme vorgesehen sein, und die Bindevorrichtung kann mit Sisal- oder Kunststoffgarn sowohl in einer Festkammerpresse als auch in einer mit einem Pressraum variabler Größe arbeiten. In der einfachsten Form ist der als Rohr oder Kanal ausgebildete Bindearm nach unten abgebogen.

Aus Fertigungsgründen kann es sinnvoll sein, einen eigenen Teil an ein vorhandenes Rohr oder einen vorhandenen Kanal anzuschließen, z. B. einen Bogen auf ein Rohr aufzuschrauben. Andererseits kann auch ein einfacher Kunststoffbogen auf ein stabiles Stahlrohr aufgesteckt werden.

Wenn das Abgabeende des Führungsteils nachgiebig ist, erfährt das hochschnellende Bindegarn eine Dämpfung seiner Bewegung; außerdem wird das Bindegarn nicht an starren Kanten des Rohrs oder Fittings oder Kanals beschädigt. Der Führungsteil bewegt sich teilweise mit dem Bindegarn, so dass dieses nicht um eine Kante geschlagen wird und hochschnellt.

Der Führungsteil kann in sich nachgiebig ausgebildet sein, z. B. als elastischer Metallteil, als Kunststoffteil, Gummiteil und dergleichen. Diese Nachgiebigkeit bremst zum einen die Bewegung des Bindegarns und ermöglicht es zum anderen, den Bindearm an Hindernissen, z. B. Schützen, etc. vorbeizubewegen.

Eine Schraubenfeder - Zugfeder oder Druckfeder - ist ein handelsüblicher, kostengünstiger Teil, der sowohl eine gute Nachgiebigkeit als auch eine gute Führungseigenschaft aufweist. Insbesondere eine Stahlfeder kann mit dünnem Federdraht und einer hohen Steigung ausgebildet werden, so dass sich kein Staub oder bröckelndes Pressgut ansetzt und den Bindegarnlauf behindert. Ein Schlauch, z. B. ein Wasserschlauch von einem Zoll Durchmesser, bietet ebenfalls eine kostengünstige Alternative, zumal ein solcher Schlauch auf einen bekannten Bindearm aufgesetzt und mittels einer Klemme gesichert werden kann.

Eine Kette ist eine weitere Alternative, zumal sie aufgrund ihres Gewichts stets nach unten hängt, in den Gliedern das Bindegarn führen kann und ausreichend flexibel ist. Es kann sowohl eine normale Gliederkette verwendet werden, die in allen Richtungen auslenken kann, als auch eine Gallsche oder Buchsenkette (Fahrradkette oder dergl.) die nur in eine Richtung ausknickt; mit der letzten Art Kette lässt sich auch die Bewegung des Bindegarns steuern.

Wieder eine andere Alternative besteht in der Verwendung eines Seils, z. B. eines steifen Stahlseils, mit einer Schlaufe, Öse oder dergleichen, in der das Bindegarn unverlierbar geführt ist.

Die Verwendung einer Schelle zum Befestigen des Seils, der Kette oder des Schlauchs hat den Vorteil, dass der Führungsteil leicht an bereits gefertigten Maschinen nachträglich angebaut werden kann.

In der Zeichnung sind mehrere nachfolgend näher beschriebene Ausführungsbeispiele der Erfindung dargestellt. Es zeigt:
- Fig. 1: einen Teil einer Rundballenpresse mit einer Bindevorrichtung,
- Fig. 2: einen Bindearm der Bindevorrichtung mit einer Kette als Führungsteil,
- Fig. 3: einen Bindearm der Bindevorrichtung mit einem Fitting und einer nachgiebigen Manschette als Führungsteil,
- Fig. 4: einen Bindearm der Bindevorrichtung mit einem Schlauch als Führungsteil und
- Fig. 5: einen Bindearm der Bindevorrichtung mit einem Stahlseil als Führungsteil und
- Fig. 6: einen Bindearm der Bindevorrichtung mit einer Feder als Führungsteil.

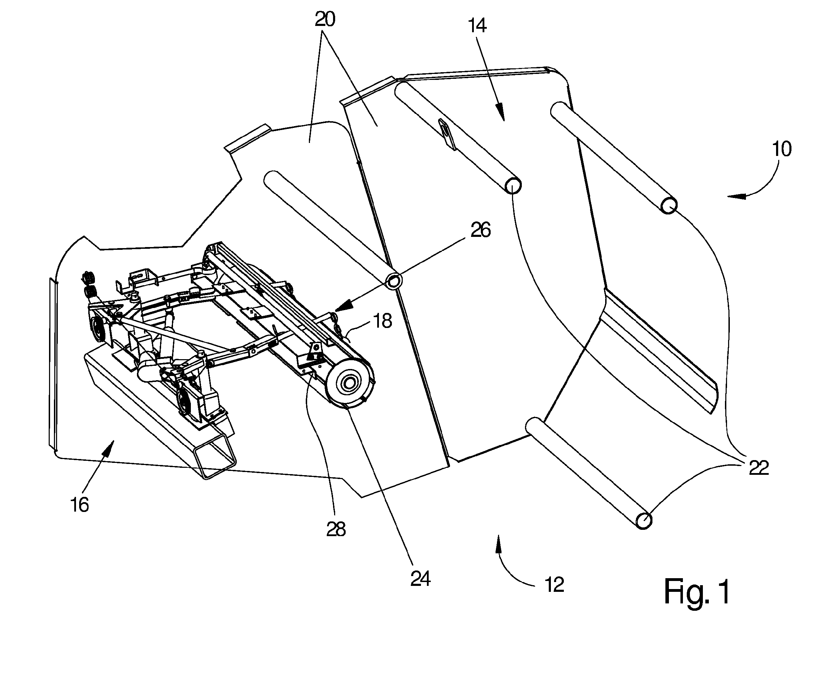

Figur 1 zeigt eine Rundballenpresse 10 mit einem Gestell 12, einer Presskammer 14 und einer Bindevorrichtung 16.

Die Rundballenpresse 10 wird in der Landwirtschaft oder im Gewerbe benutzt und dient der Herstellung von zylinderförmigen Ballen, die am Pressvorgangende mit Bindegarn 18 umwickelt und somit zusammengehalten werden. Rundballenpressen 10 sind an sich hinlänglich bekannt, z. B. von der Baureihe JOHN DEERE 575, so dass Einzelheiten nicht beschrieben werden müssen.

Das Gestell 12 setzt sich aus einem Fahrwerk, einer Deichsel und dergleichen zusammen, wird in der Zeichnung aber nur von seitlichen Wänden 20 repräsentiert, die die Presskammer stirnseitig abschließen. Die Wände 20 sind über Streben 22 mit entsprechenden Wänden auf der anderen Seite verbunden, so dass die Presskammer 14 stabil ausgeführt wird. Zwischen den Wänden 20 wird auch die Bindevorrichtung 16 gehalten, und zwar in einem vorderen, oberen Bereich.

Die Presskammer 14 wird stirnseitig von den Wänden 20 und umfangsseitig von Walzen 24 abgeschlossen, von denen nur eine einzige gezeigt ist. Nahezu zwanzig solcher Walzen 24 erstrecken sich in der Richtung der Streben 22 und sind auf einer Kreisbahn angeordnet, die eine erste untere Lücke oder Spalt zum Einlass des Pressguts und eine zweite obere Lücke oder Spalt zum Einlass von Bindegarn 18 jeweils in die Presskammer 14 belässt. In dem vorliegenden Ausführungsbeispiel ist die Presskammer 14 in ihrer Größe konstant ausgebildet, was aber nicht zwingend ist.

Vielmehr könnte die Presskammer 14 auch von variabler Größe und/oder von Riemen und/oder Stabketten umgeben sein. In der Presskammer 14 wird ein nicht gezeigter Rundballen stets in Drehung gehalten, so dass am Pressvorgangsende eingeführtes Bindegarn 18 zwischen den Walzen 24 und dem Rundballen erfasst und mitgenommen wird.

Die Bindevorrichtung 16 dient der Zufuhr des Bindegarns 18 in die Presskammer 14, dessen seitlicher Führung auf der Umfangsfläche des rotierenden Rundballens und dessen Trennung, sobald genug Bindegarn 18 um den Rundballen gewickelt ist - all dies ist hinlänglich bekannt und wird daher nur soweit beschrieben, als dies für das Verständnis der vorliegenden Erfindung erforderlich ist. Die Bindevorrichtung 16 enthält in dem vorliegenden Ausführungsbeispiel zwei Bindearme 26, die oberhalb der dargestellten Walze 24 Bindegarn 18 in die Presskammer 14 einführen. Stattdessen könnte auch ein einziger Bindearm 26 vorgesehen werden. Jeder Bindearm 26 nimmt drei markante Stellungen ein - eine Ruhestellung, eine Bindestartstellung und eine Schneidstellung - in die er jeweils motorisch geführt wird.

In der Ruhestellung erstreckt sich der Bindearm 26 ungefähr parallel zu der Längsrichtung der Walzen 24. In der Bindestartstellung, die der in Figur 1 gezeigten entspricht, wird das Bindegarn 18 in den oberen Spalt zwischen den Walzen 24 geführt, so dass es nach unten in die Presskammer 14 fällt und dort von dem rotierenden Rundballen erfasst und mitgenommen wird. Es ist wichtig, dass das Bindegarn 18 soweit herabhängt, dass es erfasst werden kann. Es muss daher vermieden werden, dass das freie herabhängende Ende des Bindegarns 18 gekrümmt ist oder an dem Bindearm 26 hängt. In der Schneidstellung befindet sich die Bindearme 26 ungefähr senkrecht zu der Längsachse der Walzen 24 und in Wirkverbindung mit einer Schneidvorrichtung 28. In dieser Stellung wird das Bindegarn 18 festgehalten, so dass es sich unter erhöhter Spannung auf die Umfangsfläche des Rundballens auflegt, und anschließend abgerissen oder abgeschnitten wird. Aufgrund der hohen Spannung tendiert der abgeschnittene Endabschnitt dazu, zurückzuschnellen und sich unkontrolliert zu bewegen.

Der Bindarm 26 ist mit einem Führungsteil 30 versehen, der das Bindegarn 18 auf einem Teil seiner Länge führt und somit verhindert, dass es eine unkontrollierte Bewegung ausführt, die dazu führen kann, dass der Endabschnitt nicht mehr bis zum Spalt in die Presskammer 14 reicht. Wenn auch diese Gefahr bei einem sich waagrecht oder im wesentlichen waagrecht erstreckenden Bindearm 26 am größten ist, so kann auch bei einem mehr aufrecht angeordneten Bindearm der Führungsteil 30 hilfreich sein.

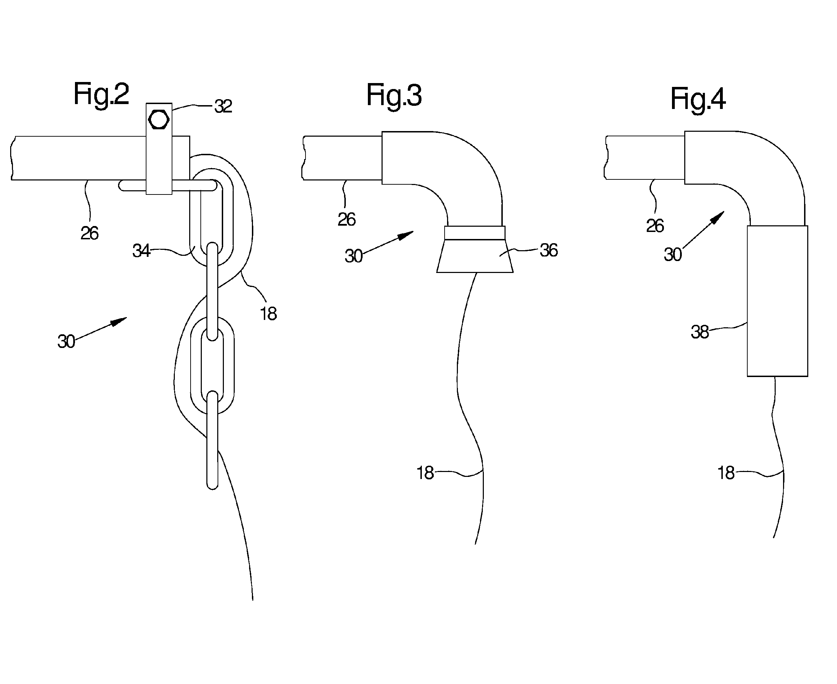

Hinsichtlich der Ausführung des Führungsteils 30 wird auf die Figuren 2 bis 6 verwiesen, die jeweils den ansonsten freien Abschnitt des Bindearms 26 mit dem Führungsteil 30 und einem Endabschnitt des Bindegarns 18 zeigen.

Gemäß Figur 2 ist der Führungsteil 30 als eine Gliederkette ausgebildet, die mit einer Schelle 32 an die Unterseite des rohrförmigen Bindearms 26 angebracht ist. Der Führungsteil 30 hat in diesem Fall fünf Glieder 34, von denen das erste, obere zwischen die Schelle 32 und den Bindearm 26 geklemmt ist und die verbleibenden vier Glieder 34 herabhängen. Das Bindegarn 18 ist durch die unteren Glieder 34 geführt, so dass beim Zurückschnellen nach dem Schneidvorgang das Bindegarn 18 gefangen wird und sich nicht um den Bindearm 26 wickeln kann, denn dazu müsste es den Führungsteil 30, d. h. die schwere Kette mitnehmen.

Nach Figur 3 ist der Führungsteil 30 als ein Bogen ausgebildet, der sich nach unten erstreckt und am unteren Ende mit einer flexiblen Manschette 36 versehen ist. Der Bogen kann aus Metall oder Kunststoff bestehen und aufgeschraubt, aufgesteckt oder aufgeklebt sein.

Die Lösung nach Figur 4 weicht insoweit von der nach Figur 3 ab, als anstatt der Manschette 36 ein Schlauch 38 aufgesteckt ist. Der Schlauch 38 kann mit einer nicht gezeigten Schelle oder Klemme, durch Klebstoff oder auf sonstige Weise befestigt werden. Je nach der zu erwartenden Energie des hochschnellenden Bindegarns 18 sollte der Schlauch 38 mit Stahleinlagen bestückt oder sonstwie ausreichend steif ausgebildet sein. Grundsätzlich könnte ein Wasserschlauch von ein Zoll Durchmesser geeignet sein.

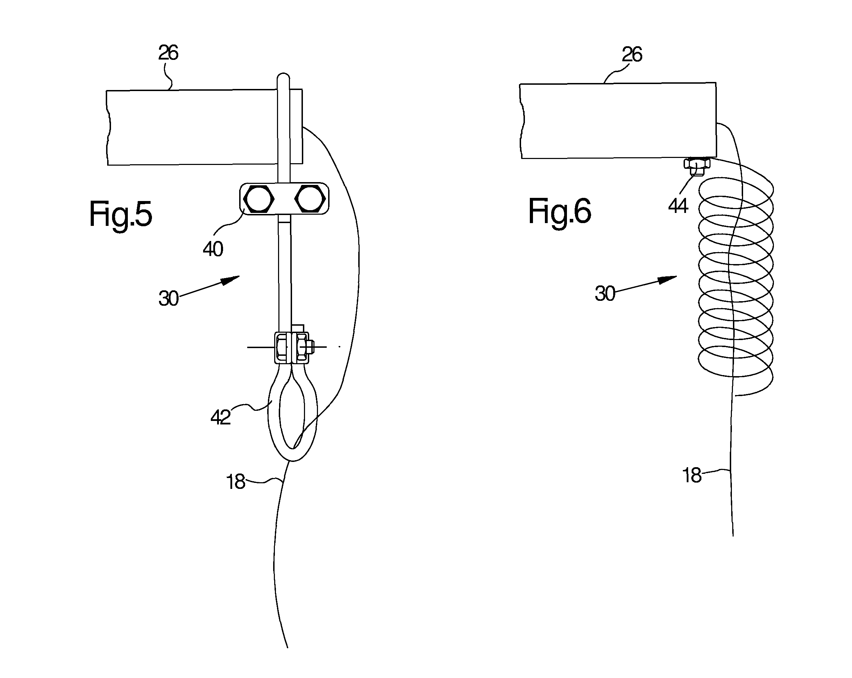

Aus Figur 5 geht eine Variante hervor, bei der ein Kunststoff ummanteltes Stahlseil an dem oberen Ende mittels einer Seilklemme 40 auf dem freien Ende des Bindearms 26 befestigt und an dem unteren Ende mit einer Schlaufe 42 versehen ist, durch die sich das Bindegarn 18 erstreckt.

Schließlich ist in Figur 6 ein Ausführungsbeispiel gezeigt, bei dem eine Schraubenfeder als Führungsteil 30 verwendet wird. Dieser Führungsteil 30 ist mittels einer Schlossschraube 44 an den Bindearm 26 angeschlossen.

Allen Ausführungsbeispielen ist gemein, dass sich der Führungsteil 30 nur über einen Teil der Länge des herabhängenden Bindegarns 18 erstreckt, z. B. über ein Viertel.

## Patentansprüche

1. Bindearm (26) einer Bindevorrichtung (16), die Bindegarn (18) abweichend von der Verlaufsrichtung in ihm nach unten abgibt, **dadurch gekennzeichnet, dass** er in einem aufrechten Führungsteil (30) endet.

2. Bindearm nach Anspruch 1, **dadurch gekennzeichnet, dass** der Führungsteil (30) als ein Rohr oder Fitting ausgebildet ist.

3. Bindearm nach Anspruch 2, **dadurch gekennzeichnet, dass** der Führungsteil (30) ausgangsseitig nachgiebig, insbesondere elastisch, ausgebildet oder mit einem derartigen Endabschnitt versehen ist.

4. Bindearm nach Anspruch 1, **dadurch gekennzeichnet, dass** der Führungsteil (30) nachgiebig ausgebildet ist.

5. Bindearm nach Anspruch 4, **dadurch gekennzeichnet, dass** der Führungsteil (30) als eine Schraubenfeder oder ein Schlauch (38) ausgebildet ist, durch deren/dessen Innenraum das Bindegarn (18) geführt ist.

6. Bindearm nach Anspruch 4, **dadurch gekennzeichnet, dass** der Führungsteil (30) als eine Kette ausgebildet ist, durch deren Glieder (34) das Bindegarn (18) geführt ist.

7. Bindearm nach Anspruch 4, **dadurch gekennzeichnet, dass** der Führungsteil (30) als ein Seil mit wenigstens einer Schlaufe (42) ausgebildet ist, durch deren Innenraum das Bindegarn (18) geführt ist.

8. Bindearm nach einem oder mehreren der vorherigen Ansprüche, **dadurch gekennzeichnet, dass** der Führungsteil (30) mittels einer Klemme, Schelle (32) oder dergleichen anbringbar ist.
